# EUROPÄISCHE PATENTSCHRIFT

(11) **EP 1 069 568 B1**
(45) Veröffentlichungstag und Bekanntmachung des Hinweises auf die Patenterteilung: **21.06.2006**
(21) Anmeldenummer: 99113826.4
(22) Anmeldetag: 15.07.1999
(51) Int. Cl.: G11B 20/10, H04N 9/79

(54) **Wiedergabegerät**
Reproducing device
Appareil de reproduction

(43) Veröffentlichungstag der Anmeldung: 17.01.2001
(73) Patentinhaber: Micronas GmbH, 79108 Freiburg i. Br. (DE)
(72) Erfinder: Becher, Jürgen, Dipl.-Ing., 79312 Emmendingen (DE); Bacher, Dieter, Dipl.-Ing., 79350 Sexau (DE); Meiner, Jürgen, Dipl.-Ing., 79112 Freiburg (DE)
(74) Vertreter: Patentanwälte Westphal, Mussgnug & Partner

(56) Entgegenhaltungen:
- EP-A- 0 165 320
- EP-A- 0 490 239
- EP-A- 0 868 091
- EP-A- 0 938 090
- DE-A- 19 722 466
- GB-A- 2 314 198

## Beschreibung

Die Erfindung betrifft ein Wiedergabegerät für die Daten einer Datenquelle, die insbesondere Audio- und/oder Videodaten liefert. Die Datenquelle kann dabei sehr unterschiedlicher Natur sein, beispielsweise kann sie hinter einer Datenschnittstelle verborgen sein, wenn die Daten mittelbar über einen Personal Computer (=PC) aus dem "Internet" oder einem anderen Datennetz stammen. Andere Beispiele für derartige Datenquellen stellen kompakte Datenspeicher dar, bei denen die zu speichernden Daten entweder magnetisch, optisch, elektronisch oder nach einem anderen Prinzip festgehalten sind und deren Daten beim Auslesen durch geeignete Einrichtungen in einen elektronischen Datenstrom umgesetzt werden. Als kompakte Datenquellen eigenen sich auch die aus der Halbleitertechnik bekannten Festkörperspeicher, weil sie keinerlei mechanischen Antrieb erfordern. Ihrer Verwendung als Massenspeicher für Audio- oder Videodaten kommt die zunehmende Speicherkapazität zugute, so daß die mechanisch anzutreibenden Speicher, z.B. optisch lesbare CD-Speicher (=Compact Disk) oder magnetisch lesbare Festplattenspeicher, durch steckbare Speichermodule auf der Basis von Festkörperspeichern künftig zunehmend ersetzbar sind.

Die von der Datenquelle stammenden Daten , die gegebenenfalls mittels eines Prüfkodes gegen Fehler gesichert sind, werden mittels einer geeigneten Einrichtung, die auch eine Korrektur fehlerhafter Daten vornimmt, in einen Eingangsdatenstrom umgesetzt und letzten Endes einem Ausgangsdekoder zugeführt, der den Datenstrom in die jeweiligen Signalkomponenten trennt und gegebenenfalls ihre Digital-Analog-Umsetzung durchführt. Diese Signalkomponenten sind dann dem eigentlichen Wiedergabewandler zugeführt, beispielsweise bei Audiosignalen einem Kopfhörer oder einem Lautsprecherpaar für das Rechts- und Linkssignal. Bei Videosignalen dient als Wiedergabewandler eventuell ein angeschlossener Fernsehempfänger, ein Multimediagerät oder eine einfache Videoanzeige auf dem Wiedergabegerät.

CD-Speicher stellen zur Zeit äußerst preiswerte Einrichtungen zur Speicherung von Daten dar, die durch die Möglichkeit des Selberschreibens (= "Brennen") von CD-Rohlingen vor allem im Audiobereich an Attraktivität gewonnen hat. Die ursprünglichen Daten stammen dabei oft aus dem "Internet". Damit handelsübliche Audioabspielgeräte verwendet werden können, müssen die zu speichernden Daten nach vorgelegten Standards abgelegt werden, beispielsweise gemäß dem "Sony-Philips-Red/Blue-Book".

Die Übertragung, Speicherung und Wiedergabe von Daten, insbesondere Audiodaten, gemäß diesen standardisierten Datenformaten, ist sehr verbreitet. Sie hat jedoch den Nachteil, daß diese Datenformate häufig keine oder nur eine relativ geringe Datenkomprimierung vorsehen und damit den vorhandenen Speicherbereich nicht optimal ausnutzen. Es gibt andererseits Verfahren, bei denen der Komprimierungsgrad in einem weiten Bereich frei vorgegeben werden kann. Reine Sprachanwendungen erlauben einen höheren Komprimierungsgrad als eine hochwertige Musikwiedergabe. Derartige Verfahren zur Komprimierung und Kodierung von Video- und Audiodaten sind beispielsweise unter der Bezeichnung "MPEG" bekannt und führen beispielsweise ihre Anwendung bei der optischen Speicherung von Video- und Audiosignalen für das "DVD"-System (DVD = Digital Video Disc). Diese vorteilhaften Datenkomprimierungsverfahren möchte man sich unter möglichst weitgehender Beibehaltung der bewährten Aufzeichnungs-, Speicher- und Wiedergabesysteme zunutze machen. Wünschenswert ist insbesondere ein Wiedergabegerät, das für die Wiedergabe mindestens eines dieser verbesserten Datenformate geeignet ist, wobei möglichst auch Datenquellen mit bisher üblichen oder gemischten Datenformaten erfasst werden sollen.

Aus der älteren EP 0 938 090 A1 ist bereits ein Audio-Wiedergabegerät bekannt bei dem verschachtelte Datenformate verarbeitet werden. Das bereit ist allerdings nicht zum Videowiedergabe geeignet.

Es ist daher Aufgabe der Erfindung, ein Wiedergabegerät unter möglichst weitgehender Beibehaltung üblicher Grundbestandteile so weiterzubilden, daß zur Wiedergabe Datenquellen mit mindestens einer speziellen Kodierung, die von der üblichen Kodierung abweicht, verwendbar sind.

Die Lösung der Aufgabe erfolgt durch die im unabhängigen Anspruch 1 genannten Merkmale.

Ein wesentlicher Teil des Wiedergabegeräts nach der Erfindung stellt die Ergänzung einer mit der Datenquelle gekoppelten Einrichtung zur Bildung eines Datenstromes durch einen Kodeumsetzer dar, der den Datenstrom der genannten Einrichtung, dessen Datenformat von der vorhandenen Dekodiereinrichtung nicht dekodiert werden kann, in ein Datenformat umsetzt, das der Ausgangsdekoder zur Bildung der Wiedergabesignale verarbeiten kann. Der Kodeumsetzer muß dabei nicht einmal alle Daten umsetzen, es kann schon ausreichend sein, wenn er nur bestimmte Teile des empfangenen Datenstroms in eine weiterverarbeitbare Form umsetzt, um die eigentlichen Wiedergabesignale gewinnen zu können.

Wenn die Wiedergabeeinrichtung mehrere Datenformate erkennt und verarbeitet, dann ist es zweckmäßig, parallel zum Kodeumsetzer einen Zwischenspeicher für diejenigen Daten vorzusehen, die nicht über den Kodeumsetzer geführt werden müssen. Ohne einen Zeitausgleich passen dann nämlich bei einer Umschaltung die direkt an den Ausgangsdekoder gelangenden Daten zeitlich nicht mit den über den Kodeumsetzer geführten Daten zusammen, so daß der Ausgangsdekoder während einer Übergangszeit fehlerhafte Wiedergabesignale erzeugt.

Je nach Geräteaufwand kann die Steuerung der Signalpfade für den Ausgangsdekoder auf einfachste Weise mittels einer manuellen Umschaltung der Signalpfade realisiert sein. Bequemer ist eine elektronisch aktivierbare Steuereinrichtung, die mittels einer Detektorschaltung bestimmte Datenformate erkennt und dann automatisch die Umschaltung bewirkt.

Für Konsumanwendungen werden als mitnehmbare Datenquellen kompakte, austauschbare Speichereinrichtungen verlangt. Optische und magnetische Speichereinrichtungen erfordern zum Auslesen in der Regel einen mechanischen Antrieb und damit eine Motorsteuereinrichtung, mit der bei wechselnden Datenformaten die Auslesegeschwindigkeit an das jeweilige Datenformat angepaßt wird. Vorteilhaft ist ferner eine Fehlererkennungseinrichtung, die beim Auftreten von Fehlern in einem der Datenströme ein Fehlersignal erzeugt, das den Ausgangsdekoder mindestens für die die Zeit der gestörten Signale stumm schaltet.

Zur Erzielung eines im zeitlichen Verlauf möglichst gleichförmigen Datenstroms, beispielsweise zum Ausgleich eines ungleichförmigen Lesevorgangs oder zum Ausgleich von paketförmigen Datenformaten, die in einer verschachtelten Form ein weiteres Datenformat enthalten, können Zwischenspeicher in dem jeweiligen Datenstrom dienen.

Werden mehrere Datenformate erkannt und verarbeitet, kann es beispielsweise zulässig sein, daß die aufgezeichneten Daten ganz oder teilweise komprimiert sind. Das erhöht die Flexibilität des gesamten Wiedergabesystems. Ob die unkomprimierten und/oder komprimierten Daten jeweils einem standardisierten Datenformat entsprechen, ist nur in sofern wichtig, als die Datenformate an den Ausgangsdekoder bzw. den Kodeumsetzer angepaßt sein müssen. Dies setzt natürlich auch voraus, daß dies bereits bei der Aufzeichung der Daten berücksichtigt wird. Entsprechende Programmier- oder Schreibeinrichtungen, die für CD-Scheiben auch unter der Bezeichung "Brenner" bekannt sind, müssen diese lesbaren Datenformate für die zu speichernden Daten vorgeben.

Die Erfindung und vorteilhafte Ausgestaltungen werden nun anhand der Figuren der Zeichnung näher erläutert:
- Fig. 1: zeigt schematisch als Blockschaltbild ein erstes Ausführungsbeispiel,
- Fig. 2: zeigt schematisch als Blockschaltbild ein zweites Ausführungsbeispiel,
- Fig. 3: zeigt schematisch als Blockschaltbild ein drittes Ausführungsbeispiel,
- Fig. 4: zeigt im Zeitdiagramm schematisch ein verschachteltes Datenformat.

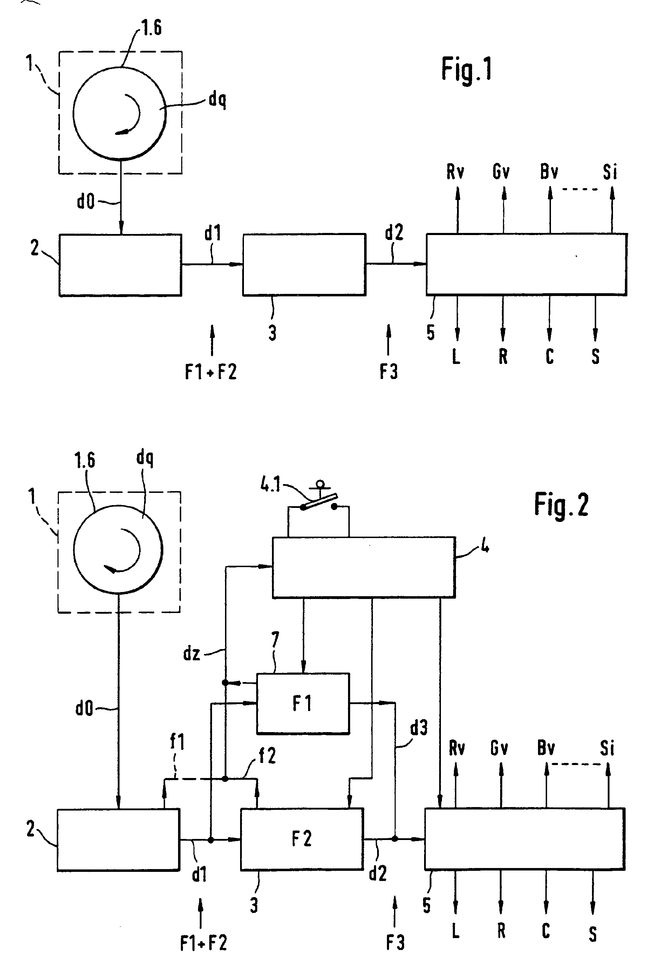

In Fig. 1 sind im Blockschaltbild die einzelnen Funktionseinheiten eines ersten Ausführungsbeispiels eines Wiedergabegeräts nach der Erfindung dargestellt. Eine Datenquelle 1 liefert einen Eingangsdatenstrom d0 an eine Einrichtung 2, die beispielsweise ein Eingangsdekoder oder eine Lesegerät sein kann, das Daten von einer Speichereinrichtung 1.6 empfängt, die in der Datenquelle 1 enthalten ist. Die Darstellung zeigt als Speichereinrichtung 1.6 eine mechanisch angetriebene CD-Scheibe, auf der die gespeicherten Daten dq in optisch lesbarer Form geschrieben sind.

Die Einrichtung 2 liefert an ihrem Ausgang einen ersten Datenstrom d1 der gegenüber dem Eingangsdatenstrom d0 fehlerkorrigiert ist und beispielsweise in einem üblichen CD-Abspieler (=CD-Player) direkt einem Ausgangsdekoder zugeführt ist, der aus dem Datenstrom d1 das analoge rechte und linke Wiedergabesignal R, L erzeugt. In dem Ausführungsbeispiel nach Fig. 1 sind drei Datenformate F1, F2, F3 angegeben, wobei das erste und dritte Datenformat F1, F3 auch identisch sein können. Der erste Datenstrom d1 enthält in seinem ersten Datenformat F1 verschachtelt das zweite Datenformat F2, das der Ausgangsdekoder 5 jedoch nicht verarbeiten kann. Der als Schaltungsblock 5 dargestellte Ausgangsdekoder kann auf Audiosignale beschränkt sein, das hängt von dem jeweiligen Aufgabenbereich des Wiedergabegerätes ab. Die Darstellung von Fig. 1 soll jedoch nicht nur für die Wiedergabe von Audiosignalen stehen, sondern auch die Eignung für Wiedergabesignale aus dem Videobereich zeigen. Für den Audiobereich stehen beispielsweise das Links-Signal L, das Rechts-Signal R, das Zentrumsignal C und das Surround-Signal S. Für den Videobereich stehen die drei analogen Farbsignale Rv, Gv, Bv und gegebenenfalls weitere Signale Si.

Der Kodeumsetzer 3 dient dazu, die komprimierten Daten des zweiten Datenformats F2 zu expandieren und daraus das dritte Datenformat F3 zu bilden. Enthält der erste Datenstrom d1 nur unkomprimierte Daten vom Datenformat F1, ergeben sich nur sinnvolle Wiedergabesignale, wenn der Kodeumsetzer 3 transparent geschaltet wird. Wie dies automatisch oder manuell erfolgen kann, zeigt das nachfolgende Ausführungsbeispiel von Fig. 2.

Fig. 2 zeigt schematisch als Blockschaltbild ein zweites Ausführungsbeispiel der Erfindung. In üblicher Weise sind gleiche Funktionseinheiten in den verschiedenen Ausführungsbeispielen mit gleichen Bezugszeichen versehen, wodurch die Beschreibung erübrigt und die Beschreibung übersichtlich bleibt. Als Grundbausteine sind wie in Fig. 1 die Datenquelle 1, die Einrichtung 2, der Kodeumsetzer 3 und der Ausgangsdekoder 5 enthalten. Hinzu kommen eine Steuereinrichtung 4 und ein Zwischenspeicher 7. Der Zwischenspeicher 7 bewirkt die "Transparenz" des Kodeumsetzers 3, weil über ihn der Datenstrom d1 den Kodeumsetzer 3 überbrückt und als Datenstrom d3 auf den Eingang des Ausgangsdekoders 5 gelangt. Wenn der Zwischenspeicher 7 nur dem Zeitausgleich dient, dann ist der Datenstrom d3 lediglich zeitlich gegenüber dem Datenstrom d1 verschoben und gegebenenfalls in der Datenrate geglättet. Im Zwischenspeicher 7 kann zusätzlich auch eine Kodenumsetzung wie im Kodeumsetzer 3 stattfinden, wo durch die Anzahl der verarbeitbaren Datenformate erhöht wird.

Der Kodeumsetzer 3 und Zwischenspeicher 7 sind im Ausführungsbeispiel gemeinsam mit dem Dateneingang des Ausgangsdekoders 5 verbunden. Damit es zwischen den Datenströmen d2, d3 nicht zum Konflik kommt, wird der Datenausgang des Kodeumsetzers 3 oder des Zwischenspeichers 7 mittels der Steuereinrichtung 4 aktiv oder nichtaktiv geschaltet. Die Nichtaktivschaltung erfolgt durch den Schwebemodus bei der Dreizustands-Steuerung (= Tristate-Modus). Eine nicht näher dargestellte Detektorschaltung 2, 3, 7 erzeugt ein Erkennungssignal d7 für das jeweilige Datenformat F1, F2, das die Steuereinrichtung 4 entsprechend beeinflußt. Eine manuelle Bedieneinrichtung 4.1 kann die Detektorschaltung 2, 3, 7 ersetzen oder ergänzen. Während der Umschaltzeit muß der Ausgangsdekoder 5 mindestens so lange gesperrt werden, wie fehlerhafte Wiedergabesignale auftreten können.

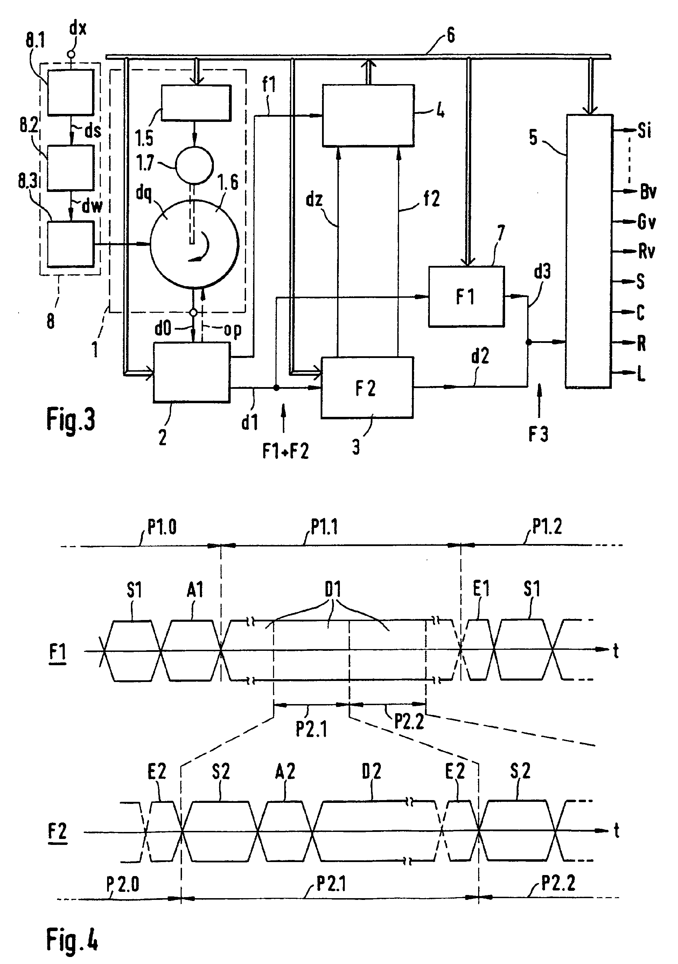

In Fig. 3 ist ein drittes Ausführungsbeispiel des Wiedergabegeräts dargestellt, das den Bereich der Datenquelle 1 gegenüber dem Ausführungsbeispiel von Fig. 2 etwas ausführlicher zeigt. Die schematisch dargestellte Datenquelle 1 enthält jetzt auch die Antriebseinrichtungen, die erforderlich sind, wenn die Speichereinrichtung 1.6 nicht ein kompakter Festkörperspeicher sondern eine rotierende CD-Scheibe ist. Der Antriebsmotor 1.7 für die CD-Scheibe wird von einer Motorsteuereinrichtung 1.5 bzgl. der Drehzahl geregelt. Bei einem komprimierten Datenformat F2 kann die Datenrate des Eingangsdatenstroms d0 etwa um den Komprimierungsgrad des Datenformats F2 gegenüber dem Standard-Datenformat F1 verringert werden. Über eine entsprechende Steuerinformation, die über einen Steuerbus 6 übertragen wird, wird die Motorsteuereinrichtung 1.5 und damit der Antriebsmotor 1.7 auf diesen Drehzahlwert eingestellt. Ein von der Einrichtung 2 ausgehender Laserstrahl op erzeugt somit aus den gespeicherten Daten dq den optischen Eingangsdatenstrom d0 mit der gewünschten Datenrate.

In Fig. 3 ist auch schematisch eine Programmiereinrichtung 8 dargestellt, mit der das verschachtelte Datenformat auf die Speichereinrichtung 1.6 geschrieben werden kann. Die Programmiereinnchtung 8 enthält dabei in Signalflußrichtung eine erste und zweite Kodiereinrichtung 8.1 bzw. 8.2 und eine Schreibeinrichtung 8.3.. Die zweite Kodiereinrichtung 8.2 und die Schreibeinrichtung 8.3 entsprechen den Funktionsblöcken handelsüblicher Programmiereinrichtungen für das übliche standardisierte Datenformat F1, die z.B. für das Beschreiben von CD-Rohlingen unter der Bezeichnung "Brenner" bekannt sind. Entsprechend der Erfindung werden die zu speichernden Daten dx jedoch zuerst mittels der ersten Kodiereinrichtung 8.1 in das zweite Datenformat F2 umgesetzt und bilden einen Datenstrom ds, der durch die zweite Kodiereinrichtung 8.2 in das erste Datenformat F1 umgesetzt wird. Der daraus resultierende Datenstrom dw entspricht somit rein formal dem standardisierten Datenformat F1, dessen Datenstrom mittels der Schreibeinrichtung 8.3 auf die Speichereinrichtung 1.6 aufgebracht wird.

In dem Ausführungsbeispiel von Fig. 3 erfolgt die Steuerung des gesamten Wiedergabegeräts über den Steuerbus 6, der befehlsseitig mit der Steuereinrichtung 4 gekoppelt ist. Die einzelnen Steuerbefehle und Steueradressen sind dort abgelegt und werden über eine Logik oder Auswerte-Einrichtung mittels der Signale f1, f2, dz aktiviert.

In Fig. 4 ist mittels zweier Zeitdiagrammdarstellungen das Schema der verschachtelten Datenformate dargestellt. Das erste Datenformat F1, das in der Regel standardisiert ist, wird in aufeinanderfolgenden Datenpakten P1.0, P1.1, P1.2 übertragen. Jedes Datenpaket enthält eingangsseitig einen Synchronbereich S1 zur Synchronisierung der Datenpakte auf der Empfängerseite, einen Zusatzdatenbereich A1, der Informationen über den jeweiligen Datenstandard, die Länge des Datenformats oder sonstige Informationen enthalten kann, dann den eigentlichen Datenbereich D1, in dem die zu übertragenden Daten mit einem Fehlerkorrekturkode enthalten sind und schließlich einen Endbereich E1, der das Ende des jeweiligen Datenformats und Datenpaktes signalisiert. Diese grundsätzliche Datenstruktur läßt selbstverständlich Abweichungen in der Art und Länge der einzelnen Blöcke usw. zu. Es können auch zusätzliche Blöcke vorhanden sein oder andere Blöcke wiederholen sich. Das nachfolgende Datenpaket P1.2 enthält wieder die gleichen Blöcke, den Synchronbereich S1, den Zusatzbereich A1 usw.

Das zweite Datenformat F2, das gegebenenfalls standardisiert ist und Daten in einer komprimierten Form enthält, unterscheidet sich in seinem Aufbau grundsätzlich nicht vom Aufbau des ersten Datenformats F1. Einer Synchroninformation S2 folgt eine Zusatzdateninformationen A2, die beispielsweise beim MPEG-Standard den jeweiligen Komprimierungsgrad der im Datenbereich D2 enthaltenen Information definiert. Auch hier wird die Länge der Datenpakete entweder im Zusatzdatenbereich A2 angegeben oder durch die Endinformation E2. Dem Datenpaket P2.1 folgt das strukturgleiche neue Datenpaket P2.2. Die Zeitachse t beim Datenformat F2 ist gegenüber der des Datenformats F1 in der schematischen Darstellung von Fig. 4 gedehnt. Die Erkenntnis um welches Datenformat F1, F2 es sich jeweils handelt, nimmt die erwähnte Detektorschaltung 2, 3, 7 aus dem Synchronbereich S1 und/oder dem Zusatzdatenbereich A1. In der Detektorschaltung ist ein Koinzidenz-Detektor enthalten, der den ersten, zweiten und dritten Datenstrom d1, d2, d3 daraufhin überwacht, ob die kennzeichnende Datenfolge dort auftritt. Wenn ja, wird das zugehörige Erkennungssignal dz für die Steuereinrichtung 4 gebildet, die die weiteren Schaltvorgänge auslöst.

## Patentansprüche

1. Wiedergabegerät
- mit einer einer Audio- und Videodatenquelle (1) nachgeschalteten Einrichtung (2) zur Bildung eines digitalen ersten Datenstroms (d1)an einem einzigen Datenstromausgang in einem ersten, insbesondere standardisierten, Datenformat (F1), dabei enthält der erste Datenstrom (d1)verschachtelt in einem Datenteil (D1) als Daten ein zweites, insbesondere standardisiertes, Datenformat (F2), wobei
- der einzige Datenstromausgang eingangsseitig mit einem Kodeumsetzer (3) und mit einem Zwischenspeicher (7) verbunden ist,
- durch den Kodeumsetzer (3) mindestens Teile des ersten Datenstroms (d1), dessen Datenformat von dem Ausgangsdekoder (5) nicht dekodiert werden kann, in einen zweiten Datenstroms (d2) mit einem für den Ausgangsdekoder (5) verarbeitbaren Datenformat umgesetzt werden,
- am Ausgang des Zwischenspeichers (7) ein dritter Datenstrom (d3) abgreifbar ist, der zum ersten Datenstrom (d1) zeitlich verschoben ist,
- ein Ausgangsdekoder (5) vorgesehen ist, an welchen eingangsseitig der Ausgang des Kodeumsetzers (3) und der Ausgang des Zwischenspeichers(7) verbunden ist zur Bildung von Audio- und Videowiedergabesignalen (L, R, C, S/Rv, Gv, Bv, Si) aus dem zweiten Datenstrom (d2) oder dem dritten Datenstrom (d3), und wobei

2. Wiedergabegerät nach Anspruch 1, **dadurch gekennzeichnet, daß** eine Steuerung der Signalpfade des zweiten und dritten Datenstroms (d2, d3) für den Ausgangsdekoder (5) durch eine manuell oder elektronisch aktivierbare Steuereinrichtung (4) erfolgt.

3. Wiedergabegerät nach Anspruch 2, **dadurch gekennzeichnet, daß** die Aktivierung der Steuereinrichtung (4) über ein Erkennungssignal (dz) aus einer Detektorschaltung (2, 3, 7) erfolgt, die in Abhängigkeit vom ersten und/oder zweiten Datenformat (F1, F2) das Erkennungssignal (dz) bildet.

4. Wiedergabegerät nach einem der Ansprüche 1 bis 3, **dadurch gekennzeichnet, daß** die Datenquelle (1) eine Speichereinrichtung (1.6) enthält, die austauschbar ist.

5. Wiedergabegerät nach Anspruch 4 **dadurch gekennzeichnet, daß** die Speichereinrichtung (1.6) und/oder Teile der Speichereinrichtung mechanisch angetrieben ist bzw. sind.

6. Wiedergabegerät nach Anspruch 4 oder 5, **dadurch gekennzeichnet, daß** die Steuereinrichtung (4) in Abhängigkeit vom Erkennungssignal (dz) eine Auslesegeschwindigkeit der Speichereinrichtung (1.6) ändert.

7. Wiedergabegerät nach Anspruch 6, **dadurch gekennzeichnet, daß** die Auslesegeschwindigkeit der Speichereinrichtung (1.6) von einer Motordrehzahl abhängig ist, die von der Steuereinrichtung (4) mittels einer Motorsteuerungseinrichtung (1.5) auf einen vorbestimmten Wert geregelt ist.

8. Wiedergabegerät nach einem der Ansprüche 1 bis 7, **dadurch gekennzeichnet, daß** eine Fehlererkennungseinrichtung (2, 3, 7) beim Auftreten von Fehlern in einem von der Datenquelle (1) gelieferten Eingangsdatenstrom (d0) oder in dem ersten, zweiten oder dritten Datenstrom (d1, d2, d3) ein Fehlersignal (f1, f2) erzeugt, das den Ausgangsdekoder (5) stumm schaltet.

9. Wiedergabegerät nach einem der Ansprüche 1 bis 8, **dadurch gekennzeichnet, daß** in der Einrichtung (2) ein Zwischenspeicher zur Erzielung eines im zeitlichen Verlauf gleichförmigen ersten Datenstromes (d1) enthalten ist.

## Claims

1. A play-back system
- having a device (2) downstream from an audio and video data source (1) for forming a digital first data stream (d1) at a single data stream output in a first, especially standardised, data format (F1), thereby the first data stream (d1) contains a second, especially standardised, data format (F2) interleaved in a data area (Dl) as data, wherein
- the single data stream output is connected at the input side to a code converter (3) and to a buffer (7),
- a third data stream (d3), which is shifted in time to the first data stream (d1), can be tapped at the output of the buffer (7),
- an output decoder (5) is provided, to the input side of which the output of the code converter (3) and the output of the buffer (7) is connected to form audio and video play-back signals (L, R, C, S/Rv, Gv, Bv, Si) from the second data stream (d2) or the third data stream (d3), and wherein
- the code converter (3) converts at least parts of the first data stream (d1), having a data format that cannot be decoded by the output decoder (5), into a second data stream (d2) having a data format that can be processed for the output decoder (5).

2. A play-back system according to Claim 1,
**characterised in that** the signal paths of the second and third data streams (d2, d3) for the output decoder (5) are controlled by a manually or electronically activated control unit (4).

3. A play-back system according to Claim 2,
**characterised in that** the activation of the control unit (4) takes place via a detection signal (dz) from a detector circuit (2, 3, 7) which forms the detection signal (dz) in dependence on the first and/or second data format (F1, F2).

4. A play-back system according to one of Claims 1 to 3,
**characterised in that** the data source (1) contains an exchangeable storage device (1.6.).

5. A play-back system according to Claim 4,
**characterised in that** the storage device (1.6) and/or parts of the storage device is or are mechanically driven.

6. A play-back system according to Claim 4 or 5,
**characterised in that** the control unit (4) changes a read-out speed of the storage device (1.6) in dependence on the detection signal (dz).

7. A play-back system according to Claim 6,
**characterised in that** the read-out speed of the storage device (1.6) is dependent on a motor speed which is controlled at a predetermined value by the control unit (4) by means of a motor controller (1.5).

8. A play-back system according to one of Claims 1 to 7,
**characterised in that** when errors occur in an input data stream (d0) delivered by the data source (1) or in the first, second or third data stream (d1, d2, d3), an error detection device (2, 3, 7) generates an error signal (f1, f2) which mutes the output decoder (5).

9. A play-back system according to one of Claims 1 to 8,
**characterised in that** a buffer for achieving a first data stream (d1) having a uniform temporal course is contained in the device (2).

## Revendications

1. Appareil de reproduction,
- avec un dispositif (2) installé après une source de données audio et vidéo (1), pour la formation d'un premier courant de données numérique (d1) à une unique sortie de courant de données dans un premier format de données (F1), en particulier normalisé, en l'occurrence le premier courant de données (d1) contient, comme données en partage de temps dans un fichier de données (D1), un deuxième format de données (F2), en particulier normalisé, dans lequel
- la sortie unique de courant de données est raccordée côté entrée à un convertisseur de code (3) et à une mémoire intermédiaire (7),
- à la sortie de la mémoire intermédiaire (7), on peut prélever un troisième courant de données (d3) décalé temporellement par rapport au premier courant de données (d1),
- on prévoit un décodeur de sortie (5), auquel la sortie du convertisseur de code (3) et la sortie de la mémoire intermédiaire (7) sont raccordées côté entrée, pour la formation de signaux de reproduction audio et vidéo (L, R, C, S/Rv, Gv, Bv, Si) à partir du deuxième courant de données (d2) ou du troisième courant de données (d3), et
- au moins des parties du premier courant de données (d1), dont le format de données ne peut pas être décodé par le décodeur de sortie (5), sont converties par le convertisseur de code (3) en un deuxième courant de données d2) avec un format de données pouvant être traité par le décodeur de sortie (5).

2. Appareil de reproduction selon la revendication 1,
**caractérisé en ce qu'**
une commande des chemins de signaux du deuxième et du troisième courant de données (d2, d3) pour le décodeur de sortie (5) est effectuée par un dispositif de commande (4) à activation manuelle ou électronique.

3. Appareil de reproduction selon la revendication 2,
**caractérisé en ce que**
l'activation du dispositif de commande (4) est effectuée par un signal d'identification (dz) provenant d'un circuit de détection (2, 3, 7), qui forme le signal d'identification (dz) en fonction du premier et/ou du deuxième format de données (F1, F2).

4. Appareil de reproduction selon l'une quelconque des revendications 1 à 3,
**caractérisé en ce que**
la source de données (1) comprend un dispositif de mémoire (1.6) remplaçable.

5. Appareil de reproduction selon la revendication 4,
**caractérisé en ce que**
le dispositif de mémoire (1.6) et/ou des parties du dispositif de mémoire est entraîné ou sont entraînées mécaniquement.

6. Appareil de reproduction selon la revendication 4 ou 5,
**caractérisé en ce que**
le dispositif de commande (4) modifie une vitesse de lecture du dispositif de mémoire (1.6) en fonction du signal d'identification (dz).

7. Appareil de reproduction selon la revendication 6,
**caractérisé en ce que**
la vitesse de lecture du dispositif de mémoire (1.6) dépend du régime d'un moteur, qui est régulé par le dispositif de commande (4) à une valeur prédéterminée au moyen d'un dispositif de commande de moteur (1.5).

8. Appareil de reproduction selon l'une quelconque des revendications 1 à 7,
**caractérisé en ce qu'**
un dispositif de détection de défauts (2, 3, 7) produit, lors de l'apparition de défauts dans un courant de données d'entrée (d0) fourni par la source de données (1) ou dans le premier, le deuxième ou le troisième courant de données (d1, d2, d3), un signal de défaut (f1, f2) qui rend muet le décodeur de sortie (5).

9. Appareil de reproduction selon l'une quelconque des revendications 1 à 8,
**caractérisé en ce qu'**
une mémoire intermédiaire est contenue dans le dispositif (2) pour obtenir un premier courant de données (d1) à débit uniforme dans le temps.
